# EUROPEAN PATENT APPLICATION

(11) **EP 3 767 374 A1**
(43) Date of publication of application: **20.01.2021**
(21) Application number: 19768498.8
(22) Date of filing: 12.03.2019
(51) Int. Cl.: G02C 7/10

(54) **FLOATING SUNGLASSES**

(30) Priority: 14.03.2018 ES 201830352 U
(71) Applicant: Fernandez Arenas, Esther, 40003 Segovia (ES)
(72) Inventor: Fernandez Arenas, Esther, 40003 Segovia (ES)
(74) Representative: Herrero & Asociados, S.L.
(86) International application number: PCT/ES2019/070166
(87) International publication number: WO 2019/175458

(57) **Abstract**

Floating sunglasses comprising at least one lens mounted in a frame and one pair of temples; the lens is water-repellent.

## Description

The present invention refers to sunglasses which have the ability to float on water together with the ability to repel water on the surface of their lenses.

### Background to the invention

The glasses are widely used by people who play sports outdoors and often near the sea. In these cases, it is very convenient to wear them because of the risks associated with overexposure of the eyes to sunlight and especially to UV-400 rays that can damage vision.

There is always a risk of losing your glasses when playing sports in the water or when you are near water. The utility model with publication number U228685 aims to solve this problem by means of floats to be attached to the glasses, which are made up of pieces capable of floating that are attached to the glasses' temples, the pieces of which have openwork appendages at their ends that are inserted into the temples to retain the float over them.

The present invention attempts to diminish this problem, and other problems in connection with water, in particular with water on the surfaces of the glasses which, if they are on the lenses, can prevent vision.

### Description of the invention

The sunglasses of the invention are specially developed to be used in water sports or in activities carried out near water. The sunglasses of the invention have the necessary technical characteristics so that in case of falling into the water the glasses do not go to the bottom and the lenses when wet can repel the water, not preventing the vision in spite of entering in contact with the water.

When taking a bath or doing water sports it is advisable to wear glasses because of the reflection of light in the water, this light is even more harmful to the eyes. In summer the problem is accentuated so it is very necessary to wear sunglasses in order to protect your eyesight from UV-400 rays at 100%.

Furthermore, it is relevant that the sunglasses of the present invention float on both fresh and salt water. Thus when a user takes a bath with the sunglasses of the invention he can wear them with peace of mind because he knows that if he drops them into the water he will be able to recover easily due to the ability to float and in case they get wet he will be able to release the water easily with a slight movement.

Therefore, the present invention refers to floating sunglasses comprising at least one lens mounted in a frame and two temples, where the lens has a hydrophobic outer coating and the frame is made of polymethylpentene (PMP).

When in the present invention the term " hydrophobic outer coating " refers to the fact that the outermost layer of the lens repels water. The hydrophobicity of the coating is measured by the contact angle of a drop of water on the lens. The greater the contact angle, the greater the hydrophobicity and the better the lens repels water. In the invention the contact angle is preferably between 90° and 120° preferably between 100° and 115°.

Polymethylpentene is a polymer obtained from the polymerisation of propylene and 4-methylpentene-1, it is an olefinic resin with excellent heat resistance and what is more relevant is its very low density in comparison with other thermoplastic polymers, 830 kg/m². Therefore, the frames of the glasses made of this material have two very relevant advantages, such as: being very light and floating in a watery environment.

This polymer is a halogen-free polymer, which makes it an advantage from an environmental point of view. The polymer used in the molding of the glasses of the invention allows injection molding. This polymer is one of the most flexible. The surface tension of polymethylpentene, (PMP) is 24 mN/m, which is the lowest after fluorine resin.

### Description of a preferred realization

As mentioned above, the invention refers to floating sunglasses comprising at least one lens mounted in a frame and two temples; wherein the lens has a hydrophobic outer coating and the frame is made of polymethyl-pentene.

The lenses of the invention can be either sunglasses or prescription lenses. The number of lenses can be one or two. The lenses are made of a material such as glass or a polymer such as polycarbonate, polymethacrylate or polyurethane.

In a preferential embodiment the lenses of the glasses of the invention comprise other layers besides the hydrophobic exterior which is selected among: an anti-scratch layer, an anti-reflective layer and/or an antistatic layer. All lenses are minimum category 3 for maximum safety against UV-400 rays. Category 3 lenses, thanks to their lens tint, are optimal when there are fairly high light conditions (spring, summer, beach, mountain and outdoor areas) as they are able to block between 82% and 92% of light.

In a preferential materialization the lenses have an external hydrophobic coating with a contact angle between 90° and 120°. More preferably the contact angle is between 100° and 115°. In particular, the hydrophobic outer coating is a layer of calcium fluoride solution.

In a preferential materialization not only the lenses but also the frame has a hydrophobic coating. In a preferential material the glasses have a hydrophobic outer coating with a contact angle between 90° and 120°. More preferably the contact angle is between 100° and 115°. In particular, the hydrophobic outer coating is materialized in a layer of calcium fluoride solution.

## Claims

1. A floating sunglasses comprising at least one lens mounted in a frame and one pair of temples; **characterized by** the lens has a hydrophobic outer coating and the frame is made of polymethylpentene.

2. The floating sunglasses according to claim 1 **characterized by** the hydrophobic outer coating has a contact angle between 90° and 120°.

3. The floating sunglasses according to claim 2 **characterized by** the hydrophobic outer coating has a contact angle between 100° and 115°.

4. The floating sunglasses according to claim 1 to 3 **characterized by** the hydrophobic outer coating is a layer of a calcium fluoride solution.

5. The floating sunglasses according to claims 1 t o4 **characterized by** a hydrophobic coating on the frame.

6. The floating sunglasses according to claim 5 **characterized by** the hydrophobic external coating of the frame has a contact angle between 90° and 120°.

7. The floating sunglasses according to claim 5 **characterized by** the hydrophobic outer coating of the frame has a contact angle between 100° and 115°.

8. The floating sunglasses according to claim 3 **characterized by** the hydrophobic coating of the frame is a layer of a calcium chloride solution .
